# EUROPÄISCHE PATENTSCHRIFT

(11) **EP 0 852 564 B1**
(45) Veröffentlichungstag und Bekanntmachung des Hinweises auf die Patenterteilung: **12.07.2000**
(21) Anmeldenummer: 96942250.0
(22) Anmeldetag: 25.09.1996
(51) Int. Cl.: B65H 51/22, D03D 47/34, D04B 15/48

(54) **LIEFERVORRICHTUNG FÜR FADENARTIGES WICKELMATERIAL**
FEED DEVICE FOR A THREAD-TYPE WINDING MATERIAL
DISPOSITIF D'ALIMENTATION POUR UN MATERIAU A ENROULER DE TYPE FIL

(30) Priorität: 26.09.1995 DE 19535756
(43) Veröffentlichungstag der Anmeldung: 15.07.1998
(60) Teilanmeldung: 99117749.4
(73) Patentinhaber: ROSER, Erich, D-88699 Frickingen (DE)
(72) Erfinder: ROSER, Erich, D-88699 Frickingen (DE); SCHNEBEL, Gerhard, D-77743 Neuried (DE)
(74) Vertreter: Patentanwälte Eisele, Otten, Roth & Dobler
(86) Internationale Anmeldenummer: DE9601854
(87) Internationale Veröffentlichungsnummer: WO9711903

(56) Entgegenhaltungen:
- WO-A-93/06283
- DE-B- 1 903 133
- DE-C- 3 326 433
- GB-A- 1 100 077
- GB-A- 2 253 216

## Beschreibung

Die Erfindung betrifft eine Liefervorrichtung für fadenartiges Wickelmaterial nach dem Oberbegriff des Anspruchs 1.

Fadenliefervorrichtungen für Textilmaschinen sind in vielfältiger Form bereits bekannt geworden. Man unterscheidet unter anderem zwei Arten von Fadenliefervorrichtungen, zum einen sogenannte Speicherfournisseure und zum anderen sogenannte Positivfournisseure. Ein Positivfournisseur ist mit einer Sensoreinheit ausgestattet, die über einen Antriebsmotor einen Fadenwickel mit steuerbarer Geschwindigkeit abwickeln kann. Über die Sensorvorrichtung wird die Fadenspannung des abgewickelten Fadens möglichst konstant auf eine voreingestellte Fadenspannung eingestellt.

Eine solche Sensorvorrichtung eines Positivfournisseurs ist beispielsweise mit der gattungsbildenden EP 06 05 464 bekannt geworden. Hierbei wird der Faden durch eine trompetenartig gewundene, horizontal stehende Spiralfeder gefädelt, die drehbar an einer vertikalen Drehachse befestigt ist. Am anderen Ende der Drehachse befindet sich ein Permanentmagnet, der durch ein U-förmiges Weicheisenjoch in seiner Nullpunktslage gehalten wird. Die Drehbewegungen des Permanentmagneten werden über einen Hallsensor erfaßt. Diese Vorrichtung erzeugt nicht in allen Anwendungsfällen die gewünschte konstante Fadenspannung. Insbesondere bei ruckartigen Fadenbewegungen zeigt diese Vorrichtung ein Eigenschwingungsverhalten, das sich im Meßsignal des Hallsensors widerspiegelt und somit die Regelung einer konstanten Fadenspannung stört.

Bei Textilmaschinen mit stark schwankendem Fadenverbrauch, insbesondere bei ruckartigem Fadenverbrauch, der extreme Fadenbeschleunigung verursacht, sind solche Positivfournisseure bislang nicht verwendbar. Derartige extreme Fadenbeschleunigungen treten beispielsweise beim Fangen eines losen Fadenendes auf. Solche losen Fadenenden finden sich bei vielfältigen Textilmaschinen, die kurzzeitig nicht benötigte Fäden abschneiden und deren Enden dann wieder einfangen, wenn diese Fäden weiterverarbeitet werden sollen. In solchen Anwendungsfällen werden sogenannte Speicherfournisseure eingesetzt, wobei die Fadenspannung durch im wesentlichen mechanisch aufgebaute Fadenbremsen geregelt wird.

Ein solcher Speicherfournisseur ist beispielsweise durch die DE 19 03 133 bekannt geworden. Bei dieser Vorrichtung wird ein Faden radial einlaufend auf einer Speichertrommel aufgewickelt und von diesem in axialer Richtung über eine Fadenbremse abgezogen. Über einen schrägstehenden Schubring wird der Wickelvorgang gesteuert, so daß stets ein ausreichender Fadenvorrat auf der Speichertrommel aufgewickelt ist. Bei der genannten Vorrichtung bildet sich jedoch ein Fadenwickel, bei dem ein stellenweise ein bis mehrlagiger unregelmäßiger Fadenkneuel ergibt. Zwar wird in der genannten Schrift behauptet, daß im ablaufenden Fadenabschnitt hierdurch keinerlei Spannungsschwankungen auftreten können, es hat sich jedoch gezeigt, daß für eine einwandfreie Funktion eines solchen Speicherfournisseurs zur Vermeidung von Spannungsschwankungen des abwickelnden Fadens nach wie vor eine kontrollierte, möglichst einlagige Wicklung auf der Speichertrommel notwendig ist.

Weiterhin ist ein derartiger Speicherfournisseur mit der DE 43 36 994 bekannt geworden. Diese Vorrichtung ist jedoch insgesamt äußerst aufwendig. Hier wird ein Faden radial auf einer Speichertrommel aufgewickelt, anschließend an der Außenseite der Speichertrommel, die zugleich eine Bremsfläche bildet, nach innen geführt und in ein zentrisch angebrachtes Hohlrohr eingefädelt. Gegenüber der Bremsfläche des Speicherkörpers ist eine scheibenförmige Gegenbremsfläche angebracht, die über aufwendige mechanische Vorrichtungen (elastische Haltescheibe, Druckfeder) an die Bremsfläche angedrückt wird. Das genannte Hohlrohr zum Einfädeln des Fadens stellt zugleich eine Hohlwelle des Antriebsmotors für die Gegenbremsfläche dar. Bei dieser Vorrichtung werden Speicherkörper und Gegenbremsfläche über zwei verschiedene Motoren getrennt angetrieben. Die gesamte Anordnung ist schwierig zu handhaben (einfädeln zur Mitte hin zwischen den beiden Bremsflächen hindurch) und äußerst aufwendig, wie insbesondere aus der Notwendigkeit zweier Antriebsmotoren hervorgeht. Eine Ausführungsform ohne doppelte Antriebseinheit weist anstatt des zweiten Antriebsmotors ein umständliches Getriebe auf, um die Gegenbremsfläche über den Antriebsmotor für die Speichertrommel anzutreiben, so daß auch diese Ausführungsform sehr aufwendig ist.

Derartige Liefervorrichtungen werden nicht nur im Bereich der Textilfertigung, sondern allgemein bei der Verarbeitung von fadenartigem Wickelmaterial, wie Textilfäden, Fasern, insbesondere Glasfasern oder Kohlefasern, Drähten, insbesondere von Feinstkupferlackdrähten für die Wicklung elektromagnetischer Spulen, oder dergleichen verwendet. Sie sind immer dann von Vorteil, wenn ein solches Material mit möglichst konstanter Materialspannung einer Verarbeitungsmaschine zugeführt werden soll.

Aufgabe der Erfindung ist es daher, eine Liefervorrichtung vorzuschlagen, bei der mit geringem Aufwand eine Mindestvorratsmenge an fadenartigem Material in dem Speicherwickel aufrechterhalten wird, und zwar so, daß das Materialende nicht gestaut wird und ein zupffreies Abziehen in axialer Richtung ermöglicht ist.

Dies wird erfindungsgemäß ausgehend von einer Liefervorrichtung der einleitend genannten Art durch die kennzeichnenden Merkmale des Anspruchs 1 erreicht.

Durch die in den Unteransprüchen genannten Maßnahmen sind vorteilhafte Weiterbildungen und Ausführungen der Erfindung möglich.

Dementsprechend wird eine erfindungsgemäße Liefervorrichtung mit einer Steuerscheibe versehen, die wenigstens eine Auflaufschräge aufweist. Diese Steuerscheibe ist axial verschiebbar, wobei wenigstens ein Sensor und/oder Schalter vorgesehen ist, der aus dem axialen Verfahrweg der Steuerscheibe ein Signal liefert, daß für die Wickelgröße signifikant ist. Der Motor der Vorrichtung wird damit stufenlos geregelt.

Das Wickelmaterial wird tangential auf den drehbar gelagerten Speicherkörper aufgewickelt, wobei es so zugeführt wird, daß es auf die Auflaufschräge auftrifft. Es gleitet sodann entlang der Auflaufschräge nach unten und schiebt dabei sanft die vor ihm aufgewickelte Wicklung in seiner axialen Bewegungsrichtung bei Seite. Der gesamte auf dem Speicherkörper befindliche Speicherwickel wird demgemäß stetig von der Steuerscheibe weggeschoben. Es befindet sich stets nur eine einzige Wickellage auf dem Speicherkörper. Sobald die Anzahl der Wicklungen ein bestimmtes Maß übersteigt, nimmt die Wickelspannung derart zu, daß das zugeführte Wickelmaterial anstatt lediglich auf der Steuerscheibe mit ihrer Auflaufschräge herunterzugleiten, diese wenigstens ein Stück weit in die entgegengesetzte Richtung axial verschiebt.

Dieser Verfahrweg der Steuerscheibe wird durch einen Sensor registriert, der mit einer Steuereinheit zur Steuerung des Antriebsmotors des Speicherkörpers verbunden ist. Der Wickelvorgang wird auf diese Weise so gesteuert, daß stets ein ausreichender Speichervorrat auf dem Speicherkörper gewickelt ist, jedoch gleichermaßen die Wickelspannung unter Kontrolle bleibt.

Eine Unter- oder Überspulung ist nicht möglich, sondern es wird Lage neben Lage erzeugt. Das Ende des Wickelmaterials wird dabei über eine einstellbare Wickelmaterialbremse so abgezogen, daß ein plötzlicher großer Verbrauch an Wickelmaterial oder auch ein Stillstand des Wickelmaterials ohne Spannungsänderung des Wickelmaterials möglich ist.

Die Steuerscheibe schiebt den Materialwickel je nach eingestellter Eingangsbremse so auf den Speicherkörper, daß das Ende des Wickelmaterials nicht gestaut wird und ein zupffreies Überkopfabziehen ermöglicht wird. Dies wird zusätzlich dadurch erleichert, daß sich die letzte Windung vor dem Abziehen entspannt und öffnet.

Da mit Ausnahme einer Materialbremse zur Einstellung der gewünschten Materialspannung keine weiteren Bauelemente am Materialabzug vorgesehen werden müssen, ist es deshalb gegenüber anderen Konstruktionen möglich, das Material auch mit einer fast verschwindend kleinen Spannung zum Verbraucher zuzuführen.

Die erfindungsgemäße Liefervorrichtung wird in einer bevorzugten Anwendungsform für Textilfäden eingesetzt. Dies ist jedoch nicht einschränkend zu verstehen. Andere fadenartige Wickelmaterialien, wie Fasern, Drähte oder dergleichen lassen sich analog mit der erfindungsgemäßen Liefervorrichtung einer entsprechenden Verarbeitungsmaschine zuführen.

Die Steuerscheibe wird vorteilhafterweise mit mehreren im Winkel gleich verteilten Rippen mit Auflaufschrägen versehen. Diese Rippen, die sich vom Außenradius der Steuerscheibe unter rechtem Winkel zur Scheibenfläche nach innen erstrecken können geradlinige oder auch gekrümmte Auflaufschrägen aufweisen. Die rippenförmige Bauweise der Steuerscheibe ist ein Beispiel für eine stabile Konstruktion mit wenig Materialaufwand. Sie kann beispielsweise aus Kunststoff gespritzt werden und stellt insgesamt ein sehr leichtes Bauelement dar. Es wäre jedoch ohne weiteres auch eine Steuerscheibe denkbar, die eine entlang ihrem Umfang kontinuierlich verlaufende Auflaufschräge aufweist.

In einer besonderen Ausführungsform wird die Steuerscheibe von Führungsstiften durchsetzt. Diese Führungsstifte verlaufen in axialer Richtung der Steuerscheibe. Die Steuerscheibe gleitet in ihrer axialen Bewegung dementsprechend an den Führungsstiften entlang und wird dabei von diesen geführt. Die Führungsstifte verlaufen vorteilhafterweise zwischen den oben angeführten Rippen mit Auflaufschrägen.

In einer vorteilhaften Ausführungsform sind die Führungsstifte an einer Stiftscheibe entlang einem kreisförmigen Umfang befestigt. So angeordnet Führungsstifte für die Steuerscheibe sind zugleich in der Lage, als Wickelkern bzw. Speicherkörper oder Speichertrommel für den Speicherwickel zu dienen. Die Stiftscheibe bildet dabei die obere Begrenzung des Speicherkörpers, während die untere Begrenzung durch die Steuerscheibe gegeben ist.

Die Stiftscheibe wird vorteilhafterweise mit einer abgerundeten Außenkante versehen, so daß sich das fadenartige Wickelmaterial, das am Rand der Stiftscheibe vorbeigeführt wird, beim Abziehen in axialer Richtung störungsfrei um die Stiftscheibe herum abwickelt.

Die Steuerscheibe wird vorzugsweise mittels eines Rückstellelementes in Richtung auf die Stiftscheibe hingedrückt. Ein solches Rückstellelement kann beispielsweise in Form einer Druckfeder, insbesondere einer zentral auf der Antriebswelle angeordneten Druckfeder bestehen. Diese Druckfeder muß in ihrer Federkonstante so abgestimmt werden, daß die Materialspannung des Speicherwickels durch die axiale Bewegung der Steuerscheibe kontrolliert bleibt.

Vorteilhafterweise wird wie oben angegeben der Motor des Speicherkörpers stufenlos regelbar in seiner Drehzahl ausgestaltet. Somit kann er auf den Materialverbrauch der jeweiligen Verbrauchermaschine eingestellt werden. Da insgesamt nur eine Lage von fadenartigem Wickelmaterial auf dem Speicherkörper aufgewickelt werden kann, muß die Liefervorrichtung in der Lage sein, bei hohem Materialverbrauch schnellstmöglich die gewünschte Menge an Wickelmaterial nachzuliefern. Dies ist durch eine Erhöhung der Motordrehzahl möglich. Bei geringerem Materialverbrauch empfiehlt es sich, die Motordrehzahl herabzuregeln, so daß ein möglichst gleichbleibender Lauf der Liefervorrichtung erreicht wird.

In einer vorteilhaften Ausführungsform werden zusätzlich Einstellmittel zur Voreinstellung der Motordrehzahl vorgesehen, um die Vorrichtung an den voraussichtlichen Materialbedarf anzupassen.

Mit einer erfindungsgemäßen Liefervorrichtung läßt sich auch die Drehzahl des Antriebsmotors abhängig vom jeweiligen Verfahrweg der Steuerscheibe regeln. In den meisten Anwendungsfällen genügt es jedoch, wenn der Antriebsmotor bei einmal eingestellter Motordrehzahl lediglich an und ausgeschaltet wird. Für beide Anwendungsfälle ist als Sensor ein mit der Steuerscheibe verschiebbarer Magnet in Verbindung mit einem ortsfestem Hallsensor geeignet, der beispielsweise am Motorgehäuse angeordnet ist. Sowohl als Stellglied als auch als einfacher Schalter ist auf diese Weise ein zuverlässiges und berührungsloses Sensorelement gegeben.

Die Bremse des Materialabzugs wird vorzugsweise zentral oberhalb der Stiftscheibe angeordnet. Dies bewirkt, daß beim Abziehen des Wickelmaterials dieses mit einer gleichbleibenden Spannung abgezogen wird, da das Wickelmaterial im gleichen Radius rund um die Stiftscheibe herum abgezogen wird. Vorzugsweise wird die genannte Bremse in ihrer Bremswirkung variabel ausgestaltet, so daß die Materialspannung, mit der das Wickelmaterial von der Liefervorrichtung abgezogen wird, den Anforderungen der jeweiligen Verarbeitungsmaschine entsprechend einzustellen ist.

In einer ganz besonderen Ausführungsform wird die Bremse für das fadenartige Wickelmaterial an einem Schwenkhebel befestigt, der den Materialabzug aus der zentral oberhalb der Stiftscheibe angeordneten Position in eine radial zum Speicherkörper angeordneten Stellung schwenken kann. In diesem Fall wird in einer Materialabzugsvorrichtung, die am Ende des Schwenkhebels angeordnet ist, zusätzlich eine Sensorvorrichtung untergebracht, mittels der eine elektronisch kontrollierte Regelung der Materialspannung möglich ist.

Eine derartige Liefervorrichtung vereint somit die Funktion eines reinen Speicherfournisseurs mit der eines oben angeführten Positivfournisseurs. Eine solche Baueinheit ist erheblich vielseitiger einsetzbar als die beiden speziellen Ausbildungsformen von Liefergeräten jeweils für sich alleine.

Das die Sensorvorrichtung durchlaufende Wickelmaterial wird tangential vom Speicherkörper abgewickelt und in der Sensorvorrichtung umgelenkt. Je nach Spannung des Wickelmaterials wird hierbei ein Zug in der Sensorvorrichtung erzeugt, der von dieser sensibel aufgenommen und für die Steuerung des Antriebsmotors verwertet wird.

Auch diese Sensorvorrichtung wird vorteilhafterweise mit einem Hallsensor versehen, in dessen Nähe sich wenigstens ein mit einer Materialführung in Verbindung stehender Magnet befindet. Es hat sich überraschenderweise gezeigt, daß das Schwingungsverhalten einer solchen Sensoreinheit gegenüber der bekannten Sensorvorrichtung mit magnetischer Rückstellung wie einleitend zum Stand der Technik beschrieben positiv beeinflußt wird, wenn der genannte Magnet mit einem mechanischen Rückstellelement versehen ist.

Als Rückstellelemente kommen beispielsweise alle Arten von Federelementen oder elastischen Körpern in Frage, wobei sich in einer vergleichsweise einfachen und leichten Bauweise der Einsatz einer Blattfeder bewährt hat. An einer Blattfeder kann der Magnet z.B. mittels eines Halterungskörpers starr befestigt werden. Hierdurch ist zudem unmittelbar ein fester Abstand des Magneten zu dem Hallsensor erreichbar.

Weiterhin hat es sich als vorteilhaft erwiesen, als Materialführung eine einfache Öse zu verwenden, die über einen Haltestift mit dem oben genannten Magneten bzw. dessen Halterungskörper in Verbindung steht. Die genannte Öse stellt eine besonders leichte Art der Materialführung dar, wodurch wiederum das Schwingungsverhalten der Sensorvorrichtung positiv beeinflußt wird.

Die bereits mehrfach genannten Schwingungen der Sensorvorrichtung sind an sich unerwünscht, werden jedoch in jedem rückstellenden Bauelement durch mechanische Einwirkung hervorgerufen. Sie erzeugen ein Signal, das dem effektiv zu messenden Signal überlagert ist. Insbesondere dann, wenn die Materialspannung in sehr kurzen Zeitintervallen, d.h. in Zeitintervallen in der Größenordnung der Schwingungsdauer der genannten Schwingungen nachgeregelt werden muß, verfälschen diese Schwingungen das "echte" Signal derart, daß Schwankungen in der Materialspannung auftreten.

Außer den oben genannten Maßnahmen zur Beeinflußung des Schwingungsverhaltens der Sensorvorrichtung empfiehlt es sich in einer besonderen Ausführungsform, die beschriebene Anordnung doppelt vorzusehen. Hierdurch ist es möglich, Schwingungen oder sonstige Bewegungen, die beide Sensoren gleichermaßen durchführen, in einer nachgeschalteten Auswerteelektronik zu kompensieren. Hierdurch ist insbesondere die Einbaulage der Sensorvorrichtung variabel, da gleiche Bewegungen beispielsweise durch das Eigengewicht aufgrund der Erdanziehung, unmittelbar kompensiert werden.

Vorzugsweise werden beide Sensoranordnungen magnetisch gekoppelt. Es ergibt sich hierdurch ein gemeinsames Schwingungsverhalten aufgrund einwirkender mechanischer Impulse, die z.B. in Form von Eigenschwingungen einer Wirkoder Strickmaschine vorliegen können. Auf diese Weise werden auch die Eigenschwingungen beider Sensoranordnungen synchronisiert, d.h. sie werden bevorzugt mit der gleichen Auslenkungsrichtung und weitgehend in Phase zueinander angeregt.

Die Magnete bzw. die entsprechenden Hallsensoren sind dabei so gepolt, daß nur eine gegensätzliche Auslenkung zwei positive Meßspannungen erzeugt. Somit werden bei solchen Störungen wie Eigenschwingungen bzw. Schwingungen aufgrund äußerer mechanischer Impulse durch die magnetische Kopplung beider Sensoranordnungen die Schwingungssignale der Störungen unmittelbar kompensiert. Sollten trotz der magnetischen Kopplung gegenläufige Schwingungen auftreten, so werden diese vorteilhafterweise elektronisch gefiltert.

Vorzugsweise wird dementsprechend die Führung des fadenartigen Wickelmaterials so vorgesehen, daß die beiden Sensoranordnungen in entgegengesetzte Richtungen ausgelenkt werden. Da, wie oben angeführt, die Anordnung so getroffen wurde, daß in diesem Fall zwei positive Meßspannungen erzielt werden, kann das Summensignal beider Hallsensoren als Größe für die aktuelle Materialspannung verwendet werden. Die gesamte Sensoranordnung kann unmittelbar auf der Leiterplatte befestigt werden, wobei es sich empfiehlt, zwischen der Elektronik, die die Hallsensoren beinhaltet, und den Magneten ein nichtmagnetisches dünnes Gehäuse als Schmutzabschirmung anzubringen. Die Signale der ausgelenkten Magnete sind von den Hallsensoren durch dieses Gehäuse hindurch abgreifbar.

In einer besonderen Ausführungsform werden die Hallsensoren und die Magnete durch ein magnetisches Gehäuse magnetisch z.B. gegenüber dem Antriebsmotor abgeschirmt.

Vorzugsweise wird der Nullableich sowie die Empfindlichkeit jeder Sensoreinheit getrennt regelbar ausgebildet. Die Nullpunktslage jedes Sensors kann unabhängig von seiner tatsächlichen Nullpunktslage, die von der Position des Magneten über dem Hallsensor abhängt, durch elektronischen Abgleich verstellt und einjustiert werden.

Da in der oben angeführten Sensorvorrichtung die Auswertung des Summensignals beider Sensoranordnungen von Vorteil ist, empfiehlt es sich, die Verstärkung dieses Summensignals ebenfalls regelbar auszubilden.

Durch die angeführten Justiermöglichkeiten ist es somit möglich, das resultierende Spannungssignal unmittelbar auf die Größe der Spannung des fadenartigen Wickelmaterials zu eichen.

Das unmittelbare Anbringen der Magneten an den genannten Blattfedern hat zwar das Schwingungsverhalten der Anordnung positiv beeinflußt, jedoch besteht bei größeren Auslenkungen die Gefahr, daß die Federn überdehnt werden und somit nicht mehr exakt in ihre Nullpunktslage zurückfedern. In einem solchen Fall muß dann über die oben genannte Nullpunktsjustage die Sensorvorrichtung elektronisch nachjustiert werden.

Um diesen zusätzliche Justageaufwand zu reduzieren, empfiehlt es sich, einen weiteren Magneten zwischen den beiden genannten Sensormagneten als Kopplungsmagneten drehbar aufzuhängen. Dieser Magnet ist an einer in seiner Drehachse befindlichen Drehstange befestigt, an deren freien Ende ein Doppelhebel angebracht ist. An jeweils einem Ende des Doppelhebels wird eine Materialführung angebracht, so daß bei einer Veränderung der Materialspannung dieser Kopplungsmagnet gedreht wird. Beim Drehen dieses Kopplungsmagneten werden über magnetische Wechselwirkung die beiden Sensormagneten in entgegengesetzte Richtungen ausgelenkt. Die durch magnetische Kopplung zwischen Materialführung und Sensormagneten erzeugte Kraft ist nach oben beschränkt, so daß ein Überdehnen der Federelemente, an denen die Sensormagneten unmittelbar befestigt sind, verhindert ist.

Um den drehbaren Kopplungsmagneten wieder in seine Ausgangslage zurückzustellen, empfiehlt es sich, ein Rückholelement, z.B. in Form einer Spiralfeder, vorzusehen. Eine solche Rückholfeder kann in einer besonderen Ausführungsform mit einer verstellbaren Vorspannung versehen werden, so daß die gewünschte Materialspannung auch mechanisch über die Vorspannung dieser Rückholfeder beeinflußbar ist.

Vorzugsweise wird zusätzlich ein justierbarer Nullpunktsanschlag für die exakte Justage der Nullpunktslage des drehbar aufgehängten Magneten vorgesehen.

In einer weiteren Ausführungsform der Erfindung wird eine Schnittstelle vorgesehen, mittels der die oben angeführten verschieden verstellbaren Parameter oder weitere Größen einprogrammierbar sind. Auch der automatische Wechsel zwischen den beiden beschriebenen Betriebsmodi wäre denkbar. Da bei großen Verarbeitungsmaschinen, z.B. großen Textilverarbeitungsmaschinen eine Vielzahl der beschriebenen Liefervorrichtungen benötigt werden, wäre unter Umständen auch der Einsatz einer busfähigen Version von Vorteil. In diesem Fall ergibt sich eine enorme Flexibilität für den Austausch derartiger Liefergeräte bzw. für das zusätzliche Anbringen oder Entfernen von Liefervorrichtungen. An der Verarbeitungsmaschine muß lediglich ein entsprechendes Halterungssystem mit Busschnittstellen an verschiedenen Orten vorgesehen werden. Die Liefervorrichtungen können sodann ganz nach Belieben ein- und ausgesteckt werden, wobei sie über einen zentralen Rechner erkannt und gesteuert werden. Eine erheblich einfachere Methode der Fernbedienung besteht darin, daß über einen I/O-Port eines Rechners einfache Spannungsoder Stromsignale einer erfindungsgemäßen Liefervorrichtung zugeführt werden.

Ein Ausführungsbeispiel der Erfindung ist in der Zeichnung dargestellt und wird anhand der Figuren nachfolgend näher beschrieben.

Im einzelnen zeigen
- Fig. 1: eine schematische Schnittdarstellung durch eine erfindungsgemäße Fadenliefervorrichtung,
- Fig. 2: eine Stirnansicht einer Vorrichtung gemäß Fig. 1,
- Fig. 3: eine Draufsicht auf eine Vorrichtung gemäß den Figuren 1 und 2,
- Fig. 4: eine Seitenansicht einer Vorrichtung gemäß Fig. 3,
- Fig. 5: eine Darstellung gemäß Fig. 3 der dort gezeigten Vorrichtung im Betrieb als Positivfournisseur,
- Fig. 6: eine Seitenansicht der Vorrichtung gemäß Fig. 5,
- Fig. 7: eine schematische Schnittdarstellung durch eine Sensorvorrichtung gemäß der Erfindung,
- Fig. 8: eine Draufsicht auf eine Sensorvorrichtung gemäß Fig. 7,
- Fig. 9: eine weitere Ausführungsform einer Sensorvorrichtung in geschnittener Darstellung und
- Fig. 10: eine Darstellung eines weiteren Ausführungsbeispiels der Sensorvorrichtung gemäß Fig. 9.

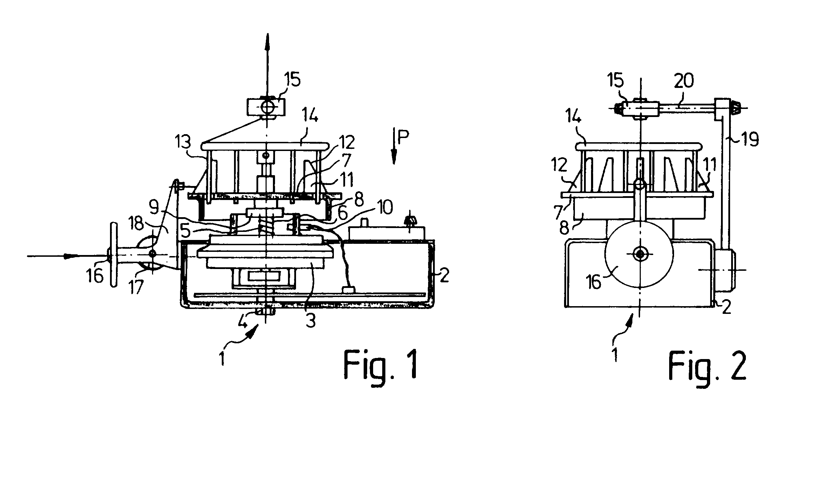

Die Fadenliefervorrichtung 1 gemäß Fig. 1 umfaßt ein Gehäuse 2, in dem ein Motor 3 mittels einer zentralen Befestigung 4 befestigt ist. Auf die Antriebswelle 5 des Motors 3 ist eine Druckfeder 6 aufgeschoben. Weiterhin ist auf der Antriebswelle 5 in axialer Richtung verschiebbar eine Steuerscheibe 7 mit einer umlaufenden Auskragung 8 aufgesetzt. Zwischen Druckfeder 6 und Steuerscheibe 7 befindet sich ein Rundmagnet 9, der beim Einschieben in Richtung auf den Motor 3 an einem Hallsensor 10 vorbeifährt.

Die Steuerscheibe 7 ist mit radial angeordneten Rippen 11 versehen, deren Außenkanten jeweils eine Auflaufschräge 12 bilden. Zwischen den Rippen 11 durchsetzen Führungsstifte 13 die Steuerscheibe 7, wobei die Führungsstifte 13 in einer Stiftscheibe 14 befestigt sind, die ebenfalls auf die Antriebswelle 5 aufgesteckt ist. In der Verlängerung der Antriebswelle 5 befindet sich eine Fadenabzugsvorrichtung 15, die unter anderem eine nicht näher dargestellte Fadenbremse beinhaltet.

Seitlich ist an der Fadenliefervorrichtung 1 ein Fadeneinlauf 16 angebracht, der ein weitere Fadenbremse 17 umfaßt. Der Fadeneinlauf 16 und die Fadenbremse 17 sind auf herkömmliche Art und Weise ausgebildet. Über einen Führungshebel 18 wird der Faden auf Höhe der Auflaufschrägen 12 gebracht.

In Fig. 2 ist insbesondere zu erkennen, daß die Fadenabzugsvorrichtung 15 über einen Schwenkhebel 19 sowie einen Haltearm 20 in Position gehalten wird.

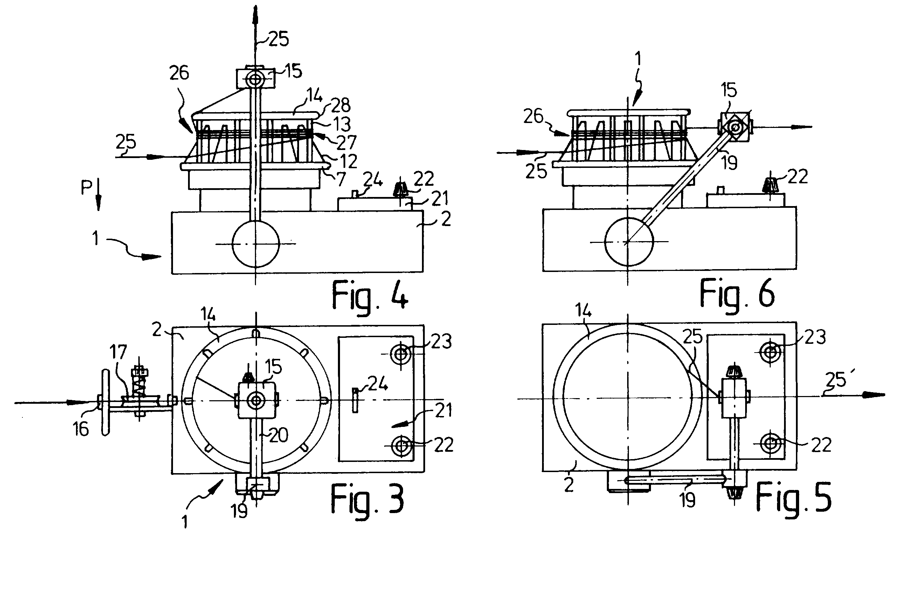

In der Draufsicht gemäß Fig. 3 ist weiterhin ein Bedienfeld 21 erkennbar, aus dem zwei Stellknöpfe 22, 23 sowie ein Umschalter 24 herausragen.

In Fig. 4 ist insbesondere der Fadenverlauf deutlich zu sehen. Der Faden 25 läuft auf Höhe der Auflaufschrägen 12 auf den Speicherkörper 26, der aus Steuerscheibe 7 mit Auflaufschrägen 12 sowie der Stiftscheibe 14 mit Führungsstiften 13 besteht, auf. Er gleitet entlang den Auflaufschrägen 12, bis er auf den Führungstiften 13 aufliegt. Er schiebt dabei den aus mehreren Windungen bestehenden Fadenwickel 27 sanft vor sich her. Er wird an der Außenseite der Stiftscheibe 14 um deren abgerundeten Rand 28 herum in die Fadenabzugsvorrichtung 15 geführt. Von dort wird er in axialer Richtung abgezogen. Die Fadenabzugsvorrichtung 15 verfügt über eine verstellbare Fadenbremse, so daß die Fadenspannung, mit der der Faden abgezogen wird, einstellbar ist.

Mit der Anzahl der Windungen des Fadenwickels 27 erhöht sich die Spannung auf dem einlaufenden Faden 25. Mit zunehmender Spannung ist der Faden 25 in der Lage, aufgrund der einwirkenden Kraftkomponenten auf die Auflaufschrägen 12 die Steuerscheibe 7 von der Stiftscheibe 14 wegzudrücken, so daß der Magnet 9 am Hallsensor 10 vorbeigeführt wird. Dieser axiale Verfahrweg in Richtung des Pfeils P der Steuerscheibe 7 wird vom Hallsensor 10 erfaßt. Dieser steht mit einer Schaltelektronik in Verbindung, die den Antriebsmotor 3 ein,oder ausschaltet. Auch eine Drehzahlregelung aufgrund des Verfahrwegs der Steuerscheibe 7 ist denkbar.

Über die Verstellknöpfe 22, 23 läßt sich die Motordrehzahl sowie die Wickelbreite einstellen. Über die Verstellung der Motordrehzahl läßt sich je nach der nachgeschalteten Textilverarbeitungsmaschine die Motordrehzahl so einstellen, daß ein Betrieb mit möglichst wenigen Schaltvorgängen des Antriebsmotors 3 ermöglicht wird. Über den Verstellkopf 23 wird der Schaltpunkt während des Verfahrwegs der Steuerscheibe 7 verstellt, so daß damit die Breite des Fadenwickels veränderbar ist.

Die gezeigte Vorrichtung ermöglicht ein einwandfreies Abziehen des Fadens 25 in axialer Richtung nach oben, wobei keinerlei Fadenabzugelemente mit Ausnahme der geschilderten Fadenbremse vorgesehen sind. Hierdurch ist es möglich, auch für ruckartigen Fadenbedarf eine verhältnismäßig konstante Fadenspannung zu gewährleisten.

Die Fadenspannung ist mit der gezeigten Anordnung auch in verschwindend kleinen Bereichen einstellbar.

Über den Umschalter 24 kann die Fadenliefervorrichtung 1 in einen weiteren Betriebsmodus umgeschaltet werden. Sie dient in diesem zweiten Betriebsmodus als sogenannter Positivfournisseur. Außer dem Umschalter 24 wird hierzu der Schwenkhebel 19 betätigt, wie in Fig. 6 dargestellt. Die Fadenabzugsvorrichtung 15 ist dabei radial in Bezug zum Speicherkörper 26 angeordnet. Der Faden 25 wird tangential vom Speicherkörper 26 abgewickelt und in der Fadenabzugsvorrichtung 15 in radiale Richtung 25' umgelenkt (s. Fig. 5). Die Fadenabzugsvorrichtung 15 beinhaltet eine in den bisherigen Figuren nicht näher dargestellte Sensorvorrichtung 30. Mit dieser Sensorvorrichtung wird die Fadenspannung des abgewickelten Fadens 25 erfaßt und die Geschwindigkeit des Antriebsmotors 3 entsprechend geregelt. Hierdurch ist eine konstantere und genauere Einstellung der Fadenspannung möglich. Insbesondere ist es möglich, bei rückläufigem Faden 25 auch einen Pendelbetrieb durchzuführen, bei der der Faden wieder auf den Speicherkörper 26 aufgewickelt wird.

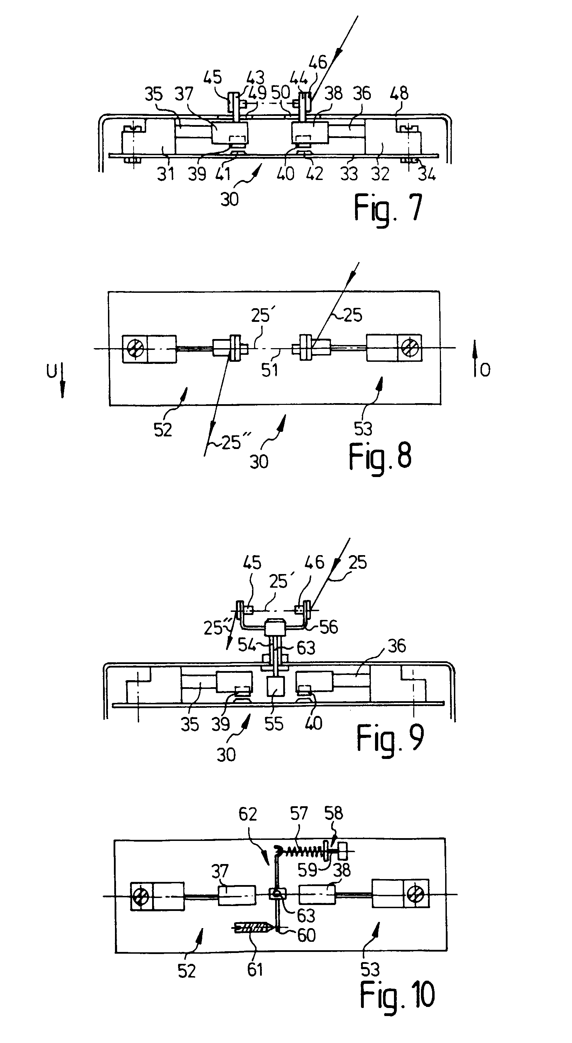

In den Figuren 7 bis 10 sind verschiedene Ausführungsformen einer solchen Sensorvorrichtung 30 dargestellt. Zwei Befestigungselemente 31, 32 sind auf einer Leiterplatte 33 beispielsweise über Schraubverbindungen 34 befestigt. In den Befestigungselementen 31, 32 sind jeweils eine Blattfeder 35, 36 befestigt, z.B. eingespannt oder eingegossen. Am anderen Ende der Blattfedern 35, 36 befindet sich jeweils ein Halterungskörper 37, 38, in die jeweils ein Magnet 39, 40 eingearbeitet ist. Die Magnete 39, 40 sind über die Blattfedern 35, 36 in einem festen Abstand a oberhalb von zwei Hallsensoren 41, 42, die sich auf der Leiterplatte 33 befinden, angeordnet. Auf der Oberseite der Halterungskörper 37, 38 sind zwei Ösenstifte 43, 44 befestigt, in die jeweils eine Führungsöse 45, 46 eingesteckt ist. Zwischen den Magneten 39, 40 und den Hallsensoren 41, 42 kann eine dünne nichtmagnetische Abdeckung (nicht näher dargestellt) als Schutz gegen Verschmutzung angebracht werden. Weiterhin können die Hallsensoren 41, 42 und die Magneten 39, 40 durch ein magnetisches Gehäuse (ebenfalls nicht dargestellt) insbesondere gegenüber dem Motor 3 abgeschirmt werden. Die gesamte Anordnung ist über einem Gehäusedeckel 48 abgedeckt, der entsprechende Öffnungen 49, 50 für die Ösenstifte 43, 44 aufweist.

Die Fadenführung des in die Sensorvorrichtung 30 einlaufenden Fadens 25 ist insbesondere in Fig. 8 erkennbar. Der Faden 25, der schräg einläuft, wird durch die Führungsöse 46 gefädelt und verläuft sodann 25' auf der Verbindungsachse 51 zwischen den beiden Sensoranordnungen 52, 53. Er ist wiederum durch die zweite Führungsöse 45 durchgefädelt, wird umgelenkt und in schräger Richtung abgeführt. Es leicht ersichtlich, daß beim Zug in Abzugsrichtung 25'' die Sensoranordnung 52 in Richtung des Pfeils U, hingegen die Sensoranordnung 53 in Richtung des Pfeils O ausgelenkt wird.

Die Magnete 39, 40 der Sensoranordnungen 52, 53 sowie die entsprechenden Hallsensoren 41, 42 sind so angeordnet, jeder Hallsensor 41, 42 genau bei dieser gegenläufigen Auslenkung ein positives Spannungssignal liefert. Hierdurch ist es möglich, ein Summensignal für die Erkennung der Fadenspannung auszuwerten, wobei Signale aus gleichgerichteten Auslenkungsrichtungen der beiden Sensoranordnungen 52, 53 gegenseitig kompensiert werden.

Über die Blattfedern 35, 36 ist ein fester Abstand a der Magnete 39, 40 zum jeweiligen Hallsensor 41, 42 ohne großen Aufwand möglich. Die unmittelbare Befestigung der Magnete 39, 40 an den Blattfedern 35, 36 führt zu einem verbesserten Schwingungsverhalten und reduziert damit störende Schwingungssignale.

Im Ausführungsbeispiel gemäß Fig. 9 sind die Führungsösen 45, 46 an einem Doppelhebel 56 befestigt, der in der Mitte um eine vertikale Drehachse 63 in einer Führungshülse 54 drehbar gelagert ist. An ihrer freien Seite ist an der Drehachse 63 ein weiterer Magnet 55 als Kopplungsmagnet befestigt.

Die Fadenführung 25, 25', 25'' (in dieser Darstellung perspektivisch angedeutet) ist identisch mit dem vorgenannten Ausführungsbeispiel. Bei einem Fadenzug in Richtung der Abzugsrichtung 25'' dreht sich somit der Magnet 55 mitsamt dem Doppelhebel 56, da er mit diesem über die Drehachse 63 verbunden ist. Die Magnete 39, 40 sind so gepolt und angeordnet, daß bei einer Verdrehung des Kopplungsmagneten 55 wiederum eine gegenläufige Auslenkung der beiden übrigen Magneten 39, 40 ausgelöst wird. Dieses Ausführungsbeispiel hat den Vorteil, daß die beiden Magneten 39, 40 bzw. deren zugeordnete Blattfedern 35, 36 nicht über einen kritischen Punkt hinaus ausgelenkt werden können. Die Blattfedern 35, 36 sind somit vor Überdehnung geschützt.

In der Ausführung gemäß Fig. 10 ist die Drehachse 63 mit einem zweiten Doppelhebel 64 versehen, der unterhalb des Doppelhebels 56 angeordnet ist, der in der dargestellten Zeichnungsebene nicht sichtbar ist.

An dem zweiten Doppelhebel 64 ist eine Zugfeder 57 befestigt, die an ihrem anderen Ende in einer Federhalterung 58 gehaltert ist. Die Federhalterung 58 ist über eine Spindel 59 verstellbar. Das freie Ende 60 des Doppelhebels 64 schlägt an einen verstellbaren Anschlag 61 an.

Die Zugfeder 57 ist nicht zwangsläufig für die Rückstellung des Doppelhebels 56 mit daran befestigten Ösen 45 und 46 notwendig, da sich der Kopplungsmagnet 55 bevorzugt in der direkten Verbindung zwischen Magneten 39, 40 ausgerichtet anordnet. Mit der Zugfeder 57 kann vielmehr die Rückstellkraft deutlich erhöht werden, wodurch bei gleichbleibender Sensibilität der Sensoranordnungen 52, 53 die Fadenspannung des Fadens 25 erhöht wird. Durch Verstellung der Federhaltung 58 über die Spindel 59 ist die Fadenspannung mechanisch grob in einem größeren Bereich einstellbar, als dies ohne die Zugfeder 57 möglich wäre. Der Anschlag 61 dient hierbei für ein Fixierung des tatsächlichen Nullpunkts der Drehmechanik 62 des Kopplungsmagneten 55, die sich aus Drehachse 54, sowie den Doppelhebeln 56, 64 zusammensetzt. Die Feinjustage der Nullpunktslage wird wie oben angeführt durch elekronische Nullpunktsjustage der Ausgangssignale der Hallsensoren 41, 42 durchgeführt.

Abgesehen von dem geschilderten Ausführungsbeispiel sind noch vielfältige Ausführungsformen einer erfindungsgemäßen Sensorvorrichtung 30 denkbar. Wesentlich ist, daß durch die Rückstellung wenigstens eines Magneten 39, 40 über wenigstens einem Hallsensor 41, 42 mittels eines mechanischen Rückstellelements 35, 36 das Schwingungsverhalten gegenüber bekannten Vorrichtungen erheblich verbessert wurde.

### Bezugszeichenliste:

- 1.: Liefervorrichtung
- 2.: Gehäuse
- 3.: Motor
- 4.: Zentralbefestigung
- 5.: Antriebswelle
- 6.: Druckfeder
- 7.: Steuerscheibe
- 8.: Auskragung
- 9.: Rundmagnet
- 10.: Hallsensor
- 11.: Rippen
- 12.: Auflaufschräge
- 13.: Führungsstifte
- 14.: Stiftscheibe
- 15.: Materialabzugsvorrichtung
- 16.: Materialeinlauf
- 17.: Materialbremse
- 18.: Führungshebel
- 19.: Schwenkhebel
- 20.: Haltearm
- 21.: Bedienfeld
- 22.: Verstellknopf
- 23.: Verstellknopf
- 24.: Umschalter
- 25.: Wickelmaterial
- 26.: Wickelkörper
- 27.: Materialwickel
- 28.: Rand
- 30.: Sensorvorrichtung
- 31.: Befestigungselement
- 32.: Befestigungselement
- 33.: Leiterplatte
- 34.: Schraubverbindung
- 35.: Blattfeder
- 36.: Blattfeder
- 37.: Halterungskörper
- 38.: Halterungskörper
- 39.: Magnet
- 40.: Magnet
- 41.: Hallsensor
- 42.: Hallsensor
- 43.: Ösenstifte
- 44.: Ösenstifte
- 45.: Führungsöse
- 46.: Führungsöse
- 48.: Gehäusedeckel
- 49.: Öffnung
- 50.: Öffnung
- 51.: Verbindungsachse
- 52.: Sensoranordnung
- 53.: Sensoranordnung
- 54.: Führungshülse
- 55.: Kopplungsmagnet
- 56.: Doppelhebel
- 57.: Zugfeder
- 58.: Federhalterung
- 59.: Spindel
- 60.: freies Ende
- 61.: verstellbarer Anschlag
- 62.: Drehmechanik
- 63.: Drehachse
- 64.: Doppelhebel

## Patentansprüche

1. Liefervorrichtung (1) für die Zulieferung von fadenartigem Wickelmaterial, wie Textilfäden, Fasern, Drähte oder dergleichen zu entsprechenden Verarbeitungsmaschinen, insbesondere für Textilmaschinen wie Strick- und Wirkmaschinen mit unregelmäßigem Wickelmaterialverbrauch, mit einem das Wickelmaterial (25) im wesentlichen schlupflos fördernden, drehbar gelagerten Speicherkörper (26), der mit einem ihn antreibenden Elektromotor (3) verbunden ist und mit Sensormitteln (7, 9, 10) ausgestattet ist, welche einen auf den Wickelkörper (26) gewickelten Materialwickel (27) überwachen, und über eine Steuereinrichtung den Antriebsmotor (3) im Sinne der Aufrechterhaltung einer Mindestvorratsmenge an Wickelmaterial (25) in dem Materialwickel (27) steuern, wobei das Wickelmaterial (25) im wesentlichen tangential auf den Wickelkörper (26) aufgewickelt und in axialer Richtung von diesem abgezogen wird, dadurch gekennzeichnet, daß eine Steuerscheibe (7) mit wenigstens einer Auflaufschräge (12) vorgesehen ist, wobei die Steuerscheibe (7) axial verschiebbar ist und wenigstens ein Sensor (10) vorgesehen ist, der aus dem axialen Verfahrweg der Steuerscheibe (7) ein die Wickelgröße kennzeichnendes Signal liefert, welches die Drehzahl des Motors (3) stufenlos regelt.

2. Liefervorrichtung nach Anspruch 1, dadurch gekennzeichnet, daß als Wickelmaterial (25) ein Textilfaden vorgesehen ist.

3. Liefervorrichtung nach einem der vorgenannten Ansprüche, dadurch gekennzeichnet, daß die Steuerscheibe (7) mit mehreren Rippen (11) versehen ist, die gleichverteilt entlang dem Umlauf der Steuerscheibe (7) angeordnet sind und Auflaufschrägen (12) aufweisen.

4. Liefervorrichtung nach einem der vorgenannten Ansprüche, dadurch gekennzeichnet, daß die Steuerscheibe (7) von Führungsstiften (13) durchsetzt ist.

5. Liefervorrichtung nach einem der vorgenannten Ansprüche, dadurch gekennzeichnet, daß die Führungsstifte (13) an einer Stiftscheibe (14) befestigt sind.

6. Liefervorrichtung nach einem der vorgenannten Ansprüche, dadurch gekennzeichnet, daß die Führungsstifte (13) sowie die Stiftscheibe (14) einen Wickelkörper (26) bilden.

7. Liefervorrichtung nach einem der vorgenannten Ansprüche, dadurch gekennzeichnet, daß ein Rückstellelement (6) für die Steuerscheibe (7) vorgesehen ist.

8. Liefervorrichtung nach einem der vorgenannten Ansprüche, dadurch gekennzeichnet, daß der Antriebsmotor (3) in seiner Drehzahl abhängig vom Sensorsignal regelbar ist und Einstellmittel (22) zur Voreinstellung der Motordrehzahl vorgesehen sind.

9. Liefervorrichtung nach einem der vorgenannten Ansprüche, dadurch gekennzeichnet, daß ein mit der Steuerscheibe (7) verschiebbarer Magnet (9) und ein ortsfester Hallsensor (10) so vorgesehen sind, daß sich der Magnet bei einer axialen Verschiebung der Steuerscheibe (7) in der Nähe des Hallsensors (10) bewegt.

10. Liefervorrichtung nach einem der vorgenannten Ansprüche, dadurch gekennzeichnet, daß eine Materialbremse (17) zentral über der Stiftscheibe (14) angeordnet ist.

11. Liefervorrichtung nach einem der vorgenannten Ansprüche, dadurch gekennzeichnet, daß die Materialbremse (17) in eine Materialabzugsvorrichtung (15) integriert ist, die an einen Schwenkhebel (19) befestigt ist.

12. Liefervorrichtung nach einem der vorgenannten Ansprüche, dadurch gekennzeichnet, daß die Materialbremse (17) variabel ist.

13. Liefervorrichtung nach einem der vorgenannten Ansprüche, dadurch gekennzeichnet, daß eine Sensorvorrichtung (30) zur elektronischen Regelung der Materialspannung in der Materialabzugsvorrichtung (15) angeordnet ist.

14. Liefervorrichtung (1) nach einem der vorgenannten Ansprüche, dadurch gekennzeichnet, daß wahlweise das Material (25) in axialer oder in radialer Richtung abziehbar ist, wobei beim Abziehen in axialer Richtung eine Materialbremse (17) für die Einstellung der Materialspannung und für das Abziehen des Materials (25) in radialer Richtung eine Sensorvorrichtung (30) vorgesehen ist, mittels der das Material (25) mit elektronisch regelbarer Fadenspannung abgezogen wird.

15. Liefervorrichtung nach einem der vorgenannten Ansprüche, dadurch gekennzeichnet, daß eine Sensorvorrichtung (30) mit wenigstens einem Hallsensor (41, 42) vorhanden ist, wobei wenigstens ein mit einer Materialführung (45, 46) und mit einem mechanischen Rückstellelement (35, 36) in Verbindung stehender Magnet (39, 40) in der Nähe des Hallsensors (41, 42) befestigt ist.

16. Liefervorrichtung nach Anspruch 15, dadurch gekennzeichnet, daß als Rückstellelement eine Blattfeder (35, 36) vorgesehen ist.

17. Liefervorrichtung nach Anspruch 15 oder 16, dadurch gekennzeichnet, daß als Materialführung eine Führungsöse (45, 46) vorgesehen ist.

18. Liefervorrichtung nach einem der Ansprüche 15 bis 17, dadurch gekennzeichnet, daß zwei Sensoranordnungen (52, 53) mit jeweils wenigstens einem Hallsensor (41, 42) und jeweils wenigstens einem an jeweils wenigstens einer Blattfeder (35, 36) befestigten Magneten (39, 40) vorgesehen sind.

19. Liefervorrichtung nach einem der Ansprüche 15 bis 18, dadurch gekennzeichnet, daß wenigstens zwei Magneten (31, 40) magnetisch gekoppelt sind.

20. Liefervorrichtung nach einem der Ansprüche 15 bis 19, dadurch gekennzeichnet, daß eine magnetische Abschirmung um den Magneten (39, 40) und den jeweiligen Hallsensoren (41, 42) herum vorgesehen ist.

21. Liefervorrichtung nach einem der Ansprüche 15 bis 20, dadurch gekennzeichnet, daß der Nullabgleich sowie die Einstellung der Empfindlichkeit getrennt für jede Sensoranordnung (52, 53) durchführbar ist.

22. Liefervorrichtung nach einem der Ansprüche 15 bis 21, dadurch gekennzeichnet, daß die Magneten (39, 40) sowie die zugehörigen Hallsensoren (41, 42) so angeordnet sind, daß jede Sensoranordnung (52, 53) bei gegenläufiger Auslenkung ein Spannungsignal mit gleichem Vorzeichen liefert, so daß das Summensignal beider Sensoranordnungen (52, 53) als signifikante Größe für die Spannung des fadenartigen Wickelmaterials verwertbar ist und daß die Verstärkung des Summensignals einstellbar ist.

23. Liefervorrichtung nach einem der vorgenannten Ansprüche, dadurch gekennzeichnet, daß ein weiterer Magnet (55) als Kopplungsmagnet zwischen den Sensoranordnungen (52, 53) vorgesehen ist.

24. Liefervorrichtung nach einem der Ansprüche 15 bis 23, dadurch gekennzeichnet, daß der Kopplungsmagnet (55) drehbar mit einer Drehachse (63) ausgebildet ist, an der die Führungselemente (45, 46) befestigt sind.

25. Liefervorrichtung nach einem der vorgenannten Ansprüche, dadurch gekennzeichnet, daß ein verstellbares Rückstellelement (57) vorgesehen ist, gegen dessen Rückstellkraft der Kopplungsmagnet (55) verdrehbar ist.

26. Liefervorrichtung nach einem der Ansprüche 15 bis 25, dadurch gekennzeichnet, daß ein Nullpunktsanschlag (61) für die mechanische Nullpunktsjustage des Kopplungsmagneten (55) vorgesehen ist.

## Claims

1. Feed device (1) for feeding thread-type winding material, such as textile threads, fibres, wires or the like to corresponding processing machines, in particular for textile machines such as knitting machines and knitting looms with irregular winding material usage, with a rotatably mounted storage body (26) conveying the winding material (25) in an essentially slip-free manner, which storage body is connected to an electric motor (3) which drives it and is equipped with sensor means (7, 9, 10), which monitor a material winding (27) wound onto the winding body (26) and by means of a control device control the drive motor (3) for the purpose of maintaining a minimum supply of winding material (25) in the material winding (27), whereby the winding material (25) is wound essentially tangentially on the winding body (26) and is drawn off the latter in axial direction, characterised in that a control disc (7) with at least one leading incline (12) is provided, whereby the control disc (7) is axially slidable, and at least one sensor (10) is provided which from the axial path of the control disc (7) supplies a signal characteristic of the winding size which controls the speed of the motor (3) continuously.

2. Feed device according to claim 1, characterised in that a textile thread is provided as the winding material (25).

3. Feed device according to one of the preceding claims, characterised in that the control disc (7) is provided with several ribs (11), which are arranged evenly distributed around the periphery of the control disc (7) and have leading inclines (12).

4. Feed device according to one of the preceding claims, characterised in that the control disc (7) is penetrated by guide pins (13).

5. Feed device according to one of the preceding claims, characterised in that the guide pins (13) are secured to a pin disc (14).

6. Feed device according to one of the preceding claims, characterised in that the guide pins (13) and the pin disc (14) form a winding body (26).

7. Feed device according to one of the preceding claims, characterised in that a restoring element (6) for the control disc (7) is provided.

8. Feed device according to one of the preceding claims, characterised in that the speed of the drive motor (3) can be controlled depending on the sensor signal and adjusting means (22) for presetting the motor speed are provided.

9. Feed device according to one of the preceding claims, characterised in that a magnet (9) displaceable by the control disc (7) and a fixed Hall sensor (10) are provided such that the magnet oh an axial displacement of the control disc (7) moves in the vicinity of the Hall sensor (10).

10. Feed device according to one of the preceding claims, characterised in that a material brake (17) is arranged centrally above the pin disc (14).

11. Feed device according to one of the preceding claims, characterised in that the material brake (17) is integrated into a material draw-off device (15) which is secured onto a pivot lever (19).

12. Feed device according to one of the preceding claims, characterised in that the material brake (17) is variable.

13. Feed device according to one of the preceding claims, characterised in that a sensor device (30) for the electronic control of material tension is arranged in the material draw-off device (15).

14. Feed device (1) according to one of the preceding claims, characterised in that optionally the material (25) can be drawn off in axial or radial direction, whereby on removal in axial direction a material brake (17) is provided for adjusting the material tension and for drawing off the material (25) in radial direction a sensor device (30) is provided, by means of which the material (25) is drawn off with electronically controllable thread tension.

15. Feed device according to one of the preceding claims, characterised in that a sensor device (30) is provided with at least one Hall sensor (41, 42), whereby at least one magnet (39, 40) in connection with a material guide (45, 46) and with a mechanical restoring element (35, 36) is secured in the vicinity of the Hall sensor (41, 42).

16. Feed device according to claim 15, characterised in that a leaf spring (35, 36) is provided as a restoring element.

17. Feed device according to claim 15 or 16, characterised in that a guide ring (45, 46) is provided as a material guide.

18. Feed device according to one of claims 15 to 17, characterised in that two sensor arrangements (52, 53) with at least one Hall sensor (41, 42) respectively, and at least one magnet (39, 40) secured to at least one leaf spring (35, 36) respectively are provided.

19. Feed device according to one of claims 15 to 18, characterised in that at least two magnets (31, 40) are coupled magnetically.

20. Feed device according to one of claims 15 to 19, characterised in that a magnetic shield is provided around the magnets (39, 40) and the respective Hall sensors (41, 42).

21. Feed device according to one of claims 15 to 20, characterised in that the zero adjustment and the adjustment of sensitivity can be performed separately for each sensor arrangement (52, 53).

22. Feed device according to one of claims 15 to 21, characterised in that the magnets (39, 40) and the associated Hall sensors (41, 42) are arranged such that each sensor arrangement (52, 53) with opposite directed displacement supplies a tension signal with the same sign so that the composite signal of both sensor arrangements (52, 53) can be used as a significant variable for the tension of the thread-type winding material, and in that the increase in the composite signal can be adjusted.

23. Feed device according to one of the preceding claims, characterised in that a further magnet (55) is provided as a coupling magnet between the sensor arrangements (52, 53).

24. Feed device according to one of claims 15 to 23, characterised in that the coupling magnet (55) is designed to be rotatable with a rotational axle (63) to which the guide elements (45, 46) are secured.

25. Feed device according to one of the preceding claims, characterised in that an adjustable restoring element (57) is provided against the restoring force of which the coupling magnet (55) can be rotated.

26. Feed device according to one of claims 15 to 25, characterised in that a zero stop (61) for the mechanical zero adjustment of the coupling magnet (55) is provided.

## Revendications

1. Dispositif d'alimentation (1) pour fournir de la matière à enrouler du type fil, comme des fils textiles, des fibres, des fils métalliques ou analogues, à des machines de traitement correspondantes, en particulier pour des machines textiles, comme des tricoteuses et des métiers rectilignes ayant une consommation irrégulière de matière à enrouler, comportant un corps de réserve (26), monté rotatif, alimentant la matière à enrouler (25) généralement sans glissement, qui est relié à un moteur électrique (3) l'entraînant et est muni de moyens capteurs (7,9,10), lesquels surveillent un bobinage de matière (27) enroulé sur le corps d'enroulement (26) et commandent, par l'intermédiaire d'un dispositif de commande, le moteur d'entraînement (3) dans le sens du maintien d'une quantité minimale de réserve en matière à enrouler (25) dans le bobinage de matière (27), la matière à enrouler (25) étant enroulée de façon généralement tangentielle sur le corps d'enroulement (26) et étant tirée de celui-ci en direction axiale,
caractérisé en ce qu'un disque de commande (7) ayant au moins un plan incliné (12) est prévu, le disque de commande (7) étant axialement déplaçable et au moins un capteur (10) étant prévu qui délivre, à partir du déplacement axial du disque de commande (7), un signal caractéristique de la grandeur d'enroulement, lequel règle de façon continue la vitesse de rotation du moteur (3).

2. Dispositif d'alimentation selon la revendication 1,
caractérisé en ce qu'un fil textile est prévu comme matière à enrouler (25).

3. Dispositif d'alimentation selon une des revendications précitées,
caractérisé en ce que le disque de commande (7) est muni de plusieurs nervures (11) qui sont agencées de façon uniformément répartie le long de la périphérie du disque de commande (7) et présentent des plans inclinés (12).

4. Dispositif d'alimentation selon une des revendications précitées,
caractérisé en ce que le disque de commande (7) est traversé par des broches de guidage (13).

5. Dispositif d'alimentation selon une des revendications précitées,
caractérisé en ce que les broches de guidage (13) sont fixées sur un disque à broches (14).

6. Dispositif d'alimentation selon une des revendications précitées,
caractérisé en ce que les broches de guidage (13), ainsi que le disque à broches (14), forment un corps d'enroulement (26).

7. Dispositif d'alimentation selon une des revendications précitées,
caractérisé en ce qu'un élément de rappel (6) est prévu pour le disque de commande (7).

8. Dispositif d'alimentation selon une des revendications précitées,
caractérisé en ce que le moteur d'entraînement (3), concernant sa vitesse de rotation, peut être réglé de façon dépendant du signal de capteur et des moyens de réglage (22) sont prévus pour le réglage préalable de la vitesse de rotation du moteur.

9. Dispositif d'alimentation selon une des revendications précitées,
caractérisé en ce qu'un aimant (9) déplaçable avec le disque de commande (7) et un capteur Hall fixe (10) sont prévus de sorte que l'aimant, lors d'un déplacement axial du disque de commande (7), se déplace à proximité du capteur Hall (10).

10. Dispositif d'alimentation selon une des revendications précitées,
caractérisé en ce qu'un frein de matière (17) est agencé de façon centrale sur le disque à broches (14).

11. Dispositif d'alimentation selon une des revendications précitées,
caractérisé en ce que le frein de matière (17) est intégré dans un dispositif d'extraction de matière (15), qui est fixé à un levier pivotant (19).

12. Dispositif d'alimentation selon une des revendications précitées,
caractérisé en ce que le frein de matière (17) est variable.

13. Dispositif d'alimentation selon une des revendications précitées,
caractérisé en ce qu'un dispositif capteur (30) est agencé pour le réglage électronique de la tension de matière dans le dispositif d'extraction de matière (15).

14. Dispositif d'alimentation (1) selon une des revendications précitées,
caractérisé en ce que, au choix, la matière (25) peut être extraite en direction axiale ou en direction radiale, lors de l'extraction en direction axiale, un frein de matière (17) pour le réglage de la tension de matière et, pour l'extraction de la matière (25) en direction radiale, un dispositif capteur (30) étant prévus, grâce auquel la matière (25) est extraite avec une tension de fil pouvant être réglée électroniquement.

15. Dispositif d'alimentation selon une des revendications précitées,
caractérisé en ce qu'un dispositif capteur (30) ayant au moins un capteur Hall (41,42) est prévu, au moins un aimant (39,40) relié à un élément de rappel mécanique (35,36) et à un guide de matière (45,46) étant fixé à proximité du capteur Hall (41,42).

16. Dispositif d'alimentation selon la revendication 15,
caractérisé en ce que, comme élément de rappel, il est prévu un ressort à lames (35,36).

17. Dispositif d'alimentation selon la revendication 15 ou 16,
caractérisé en ce que, comme guide de matière, il est prévu un oeillet de guidage (45,46).

18. Dispositif d'alimentation selon une des revendications 15 à 17,
caractérisé en ce que deux agencements de capteur (52,53) ayant à chaque fois au moins un capteur Hall (41,42) et au moins à chaque fois un aimant (39,40) fixé à au moins à chaque fois un ressort à lames (35,36) sont prévus.

19. Dispositif d'alimentation selon une des revendications 15 à 18,
caractérisé en ce qu'au moins deux aimants (39,40) sont couplés magnétiquement.

20. Dispositif d'alimentation selon une des revendications 15 à 19,
caractérisé en ce qu'un blindage magnétique est prévu autour des aimants (39,40) et des capteurs Hall respectifs (41,42).

21. Dispositif d'alimentation selon une des revendications 15 à 20,
caractérisé en ce que le réglage du zéro ainsi que le réglage de la sensibilité peuvent être effectués de façon séparée pour chaque agencement de capteur (52,53).

22. Dispositif d'alimentation selon une des revendications 15 à 21,
caractérisé en ce que les aimants (39,40) ainsi que les capteurs Hall correspondants (41,42) sont agencés de sorte que chaque agencement de capteur (52,53), dans le cas d'une déviation opposée, délivre un signal de tension de même signe, de sorte que le signal somme des deux agencements de capteur (52,53) peut être utilisé comme grandeur significative pour la tension de la matière à enrouler du type fil, et en ce que l'amplification du signal somme peut être réglée.

23. Dispositif d'alimentation selon une des revendications précitées,
caractérisé en ce qu'un autre aimant (55) est prévu, comme aimant de couplage, entre les agencements de capteur (52,53).

24. Dispositif d'alimentation selon une des revendications 15 à 23,
caractérisé en ce que l'aimant de couplage (55) est réalisé en pouvant tourner autour d'un axe de rotation (63) auquel sont fixés les éléments de guidage (45,46).

25. Dispositif d'alimentation selon une des revendications précitées,
caractérisé en ce qu'il est prévu un élément de rappel réglable (57), contre la force de rappel duquel l'aimant de couplage (55) peut tourner.

26. Dispositif d'alimentation selon une des revendications 15 à 25,
caractérisé en ce qu'une butée de point de référence (61) pour l'ajustement mécanique du point de référence de l'aimant de couplage (55) est prévue.
